# EUROPÄISCHE PATENTSCHRIFT

(11) **EP 1 441 045 B1**
(45) Veröffentlichungstag und Bekanntmachung des Hinweises auf die Patenterteilung: **03.11.2010**
(21) Anmeldenummer: 03028259.4
(22) Anmeldetag: 10.12.2003
(51) Int. Cl.: C23C 18/20, C25D 5/56, C23C 18/24, C23C 18/28

(54) **Verfahren zur Aktivierung von Substraten für die Kunststoffgalvanisierung**
Process for activating a plastic substrate to be electroplated
Procédé d'activation d'un substrat plastique pour sa galvanisation

(30) Priorität: 18.12.2002 DE 10259187
(43) Veröffentlichungstag der Anmeldung: 28.07.2004
(73) Patentinhaber: Enthone Inc., West Haven, Connecticut 06516 (US)
(72) Erfinder: Königshofen, Andreas, Dr., 50827 Köln (DE)
(74) Vertreter: Stenger, Watzke & Ring

(56) Entgegenhaltungen:
- WO-A-99/13696
- DE-A1- 2 206 172
- DE-A1- 3 248 000
- US-A- 3 661 783
- US-A- 3 672 940
- US-A- 3 767 538
- US-A- 4 814 205

## Beschreibung

Die vorliegende Erfindung betrifft ein Verfahren zur Metallisierung von Kunststoffsubstraten, wobei die Kunststoffoberflächen gebeizt, aktiviert, gespült, gegebenenfalls mit einer Beschleunigerlösung behandelt und chemisch-reduktiv und/oder im Anschluß elektrolytisch metallisiert werden.

Verfahren der vorgenannten Art sind aus der US-A-3 661 783, der US-A-3 672 940 und der US-A-3 767 538 bekannt geworden.

Die Entwicklung von Verfahren zur Metallisierung von Kunststoffen wird heutzutage neben der Erzeugung von dekorativen Oberflächen besonders intensiv aufgrund der damit zu erreichenden, erheblich vorteilhafteren, funktionellen Eigenschaften, insbesondere gegenüber beschichteten metallischen Gegenständen, vorangetrieben. Das sehr geringe Gewicht, die einfachere und kostengünstigere Herstellung der Kunststoffe sowie die unkomplizierte Verarbeitbarkeit und die umfassenden Gestaltungsmöglichkeiten von Kunststoffen, haben bereits zu einem festen Platz am Markt, insbesondere im dekorativen Sektor oder im Bereich der elektronischen Anwendung geführt.

Mit der Nachfrage nach unterschiedlichsten Variationen metallbeschichteter Kunststoffe wächst auch weiterhin die Anzahl der Metallisierungsverfahren sowie der metallisierungsfähigen Kunststoffe. Grundvoraussetzung für eine elektrolytische Kunststoffmetallisierung ist, daß der nicht leitende Kunststoff mit einer leitenden Schicht als Basis für die anschließende Metallisierung haftfest belegt wird. Die wesentlichen Arbeitsgänge sind die Konditionierung der Kunststoffoberflächen, das Bekeimen und die anschließende Metallisierung.

Bei den gängigsten Verfahren wird die Kunststoffoberfläche zunächst gebeizt, um diese aufzurauhen bzw. derart chemisch zu verändern, damit die Aufnahme von Metallkeimen möglich wird. Gebeizt wird beispielsweise mit Hilfe von Chrom-Schwefelsäure-Beizen, saurer oder alkalischer Permanganatbeizen oder anderer oxidierender Beizen. Ebenso kann die Aufrauhung der Substratoberflächen auch durch eine Plasmabehandlung erfolgen. Die gebeizten Kunststoffteile werden gespült und im Anschluß daran bekeimt beziehungsweise aktiviert. Im Anschluß an die Aktivierung erfolgt je nach Aktivierungsschicht, entweder eine chemisch-reduktive beziehungsweise stromlose Metallabscheidung einer Leitschicht auf der Kunststoffoberfläche, mit einem anschließenden elektrolytischen Schichtaufbau, oder eine unmittelbare Direktmetallisierung.

Die Aktivierung kann auf dem Wege der kolloidalen oder ionogenen Katalyse sowie durch den Einsatz von Metallaktivatoren beziehungsweise Metallkomplexaktivatoren erfolgen. Letztere bilden schwerlösliche Sulfide und Polysulfide, wobei als Metalle insbesondere Zinn, Blei, Silber, Kobalt, Mangan und Kupfer geeignet sind. Der klassische kolloidale Prozeß umfaßt dabei jedoch eine Vielzahl von zeit- und kostenintensiven Reduktions- und Spülvorgängen.
Neuartige Verfahren auf Basis der Metall- beziehungsweise Metallkomplexaktivatoren ermöglichen zwar einen wesentlich kürzeren Behandlungszeitraum, es ist jedoch nicht jeder Kunststoff zur Eindringung und Einlagerung derartiger Metallkomplexe geeignet, so daß nach dem Spülen oder Zwischentauchen in Lösung die oberflächlich locker gebundenen Komplexe entfernt werden und eine ungleichmäßige und/oder unvollständige Vernetzung der Metallkomplexe mit einer Vernetzerlösung entsteht, was nachteiligerweise zu einer unvollständigen Metallisierung der Kunststoffoberfläche und/oder zum Reißen und/oder Abplatzen der trockenen Metallisierungsschicht führt.

Dahingegen bieten Verfahren der ionogenen Katalyse zwar Vereinfachungen gegenüber den herkömmlichen Varianten, sind unempfindlicher gegenüber verschleppten Chemiekalien aufeinanderfolgender Bäder, und somit umweltschonender. Jedoch sind auch die Verfahren der ionogenen Katalyse bislang nicht für alle Kunststoffe geeignet.

Speziell Kunststoffe wie Polyacetat, Polysulfon, Polystyrol, Polyphenylenoxid, Polypropylen oder Polyamid können mit den bekannten Verfahren bislang gar nicht oder nur mit stark erhöhtem Aufwand metallisiert werden. So ist es beispielsweise möglich, einige dieser Kunststoffe durch eine gezielte Abstimmung der Beize auf den jeweiligen Kunststoff sowie durch weitere aufwendige und vor allem kostenintensive Verfahrensanpassungen, zu metallisieren. Aufgrund der daraus bedingten Einhaltung ganz bestimmter Arbeitsbedingungen sind derartige Verfahren oftmals extrem störanfällig. Bereits kleinste Änderungen in den Verfahrensbedingungen können dazu führen, daß die Kunststoffoberfläche nicht optimal vorbereitet wird, so daß eine funktionssichere und zufriedenstellende Haftung der Metallschicht auf der Kunststoffoberfläche sowie ausreichend reproduzierbare Ergebnisse bislang nicht zu erzielen sind. Insbesondere falsche Beizzeiten verändern die Oberflächen derart nachteilig, daß genauste Kontrollen von Nöten sind, um die Ausschußraten gering zu halten.

Speziell Werkstücke aus Polyamid können nach den im Stand der Technik bekannten Verfahren, sofern überhaupt möglich, nur mit einem unverhältnismäßig hohen Aufwand galvanisiert werden. So werden bislang für die Herstellung von im wesentlichen zufriedenstellenden Metallschichten sehr häufig Verfahrensschritte mehrfach durchlaufen, wobei hauptsächlich der Aktivierungsschritt mehrfach hintereinander durchgeführt wird. Dabei nimmt jedoch der Anteil an fehlerhaft beschichteten Teilen, insbesondere bei größeren Werkstücken, nur in einem nicht zufriedenstellenden Maße ab.

Der vorliegenden Erfindung liegt die **Aufgabe** zu Grunde, ein Verfahren zur Metallisierung von unterschiedlichsten Kunststoffoberflächen, insbesondere von Werkstücken aus Polyamid bereitzustellen, mit dem bei einfacher, kostengünstiger und schneller Verfahrensführung die Metallisierungsfähigkeit erheblich verbessert wird und funktionssichere sowie reproduzierbare Metallüberzüge erzeugt werden.

Die Aufgabe wird erfindungsgemäß durch ein Verfahren der eingangs genannten Art **gelöst**, welches dadurch gekennzeichnet ist, daß das Beizen und Aktivieren der Kunststoffsubstrate in einem gemeinsamen Verfahrensschritt durchgeführt wird und in einer ersten Beiz- und Aktivierungslösung, umfassend zumindest eine mineralsäurehaltige Beize und einen ionogenen Aktivator, erfolgt, wobei die Beize wenigstens Ameisensäure, Essigsäure und/oder Trifluoressigsäure aufweist.

Durch das erfindungsgemäße Verfahren wird vorteilhafterweise eine wesentlich einfachere und wirtschaftlichere Konditionierung der zu metallisierenden Kunststoffe angegeben, wodurch eine Einsparung von Prozeßstufen sowie eine Verbesserung der Haftfestigkeit der Metallisierungsschicht auf Kunststoffsubstraten, wie insbesondere dem marktrelevanten Polyamid, ermöglicht wird. Dabei wird im Konditionierungsprozeß das zu metallisierende Kunststoffsubstrat zum gleichzeitigen Beizen und Aktivieren der Kunststoffoberflächen in eine erste Beiz- und Aktivierungslösung, umfassend zumindest eine mineralsäurehaltige Beize und einen ionogenen Aktivator, gegeben, wobei die Beize wenigstens Ameisensäure, Essigsäure und/oder Trifluoressigsäure aufweist. Das erfindungsgemäße Verfahren zeichnet sich ferner dadurch aus, daß die zu metallisierende Kunststoffoberfläche wenig störanfällig und wenig aufwendig metallisiert werden kann. Mit dem Verfahren wurde eine vorteilhafte Anpassung der Beizen an die Aktivierungslösung vorgenommen, um diese als eine erste Lösung zur Konditionierung der Kunststoffsubstrate einzusetzen. Diese erste Lösung - oder auch Konditionierungslösung - ermöglicht aufgrund ihrer optimierten Zusammensetzung vorteilhafterweise die Durchführung von zwei Prozeßstufen in einem Verfahrensschritt. Sie weist dabei zumindest eine oder mehrere Beizen, ein beizaktives Netzmittel, eine Mineralsäure, wie beispielsweise Salzsäure, Schwefelsäure, Salpetersäure etc., und einen Edelmetallionen, vorzugsweise Palladiumionen, enthaltenden Aktivator auf.

Überraschenderweise stellte sich heraus, daß mit dem erfindungsgemäßen Verfahren nicht nur großflächige Teile, sondern auch komplexe Werkstücke, insbesondere aus Polyamid bestehende Kunststoffsubstrate in diesem Konditionierungsschritt derartig vorteilhaft konditioniert werden, daß eine, beispielsweise für das Direktmetallisierungsverfahren notwendige, Oberflächenstruktur mit deutlichen Aufrauhungen und einer Vielzahl von Kavitäten erzeugt und somit eine optimale beziehungsweise vollständige Bekeimung mit Aktivatormolekülen gewährleistet wird.

Ebenso überraschend stellte sich heraus, daß im Konditionierungsschritt durch die gleichzeitige Aufrauhung und Aktivierung der Kunststoffoberflächen mit einem in der Konditionierungslösung vorhandenen Netzmittel sowie einem ionogenen Aktivator, die Einbringung der Aktivatormoleküle in die erzeugten Kavernen wesentlich weniger gehemmt wird, als bei der herkömmlich Prozeßführung, in der der Aktivierungsschritt im Anschluß an die Beize erfolgt. Demzufolge dringen die direkt im Konditionierungsschritt eingebrachten Aktivatorkeime vorteilhafterweise wesentlich tiefer in die im Kunststoff erzeugten Kavernen ein. Dies begünstigt bei einer nachfolgenden Metallisierung ein gleichermaßen tieferes Eindringen der Metallschicht in den Kunststoff und somit eine wesentlich bessere Haftung zwischen der Metallschicht und dem Kunststoff als bei herkömmlichen Verfahren.

Gemäß einer vorteilhaften Weiterbildung erfolgt die Behandlung der Kunststoffsubstrate mit der Konditionierungslösung bei einer Temperatur zwischen 20°C und 90°C, vorzugsweise zwischen 30 und 35°C, wodurch in vorteilhafter Weise ermöglicht wird, auch bei niedrigeren Temperaturen zu arbeiten, so daß Energie respektive Kosten eingespart werden und somit das Verfahren wirtschaftlicher gestaltet wird. Zudem ist die Konditionierungslösung aufgrund ihrer Zusammensetzung gegenüber den bekannten Beizlösungen weniger aggressiv sowie gegenüber den bekannten Aktivierungslösungen stabiler beziehungsweise weniger störanfällig, so daß ein größerer Arbeitsspielraum vorhanden ist, da keine exakten Tauchzeiten, Temperaturen etc. aufwendig eingehalten werden müssen, was das erfindungsgemäße Verfahren wesentlich beständiger macht. Dies bedingt vor allem die gute Reproduzierbarkeit und die geringen Ausschußraten des erfindungsgemäßen Verfahrens. Dies bewirkt zusätzlich, daß eine ständige Gestellbelegung vermieden wird.

Gemäß einer vorteilhaften Weiterbildung des erfindungsgemäßen Verfahrens wird vorgeschlagen, daß die Konditionierung der Kunststoffsubstrate mit der ersten Lösung innerhalb eines Zeitraums von 1 bis 10 min, vorzugsweise 4 bis 6 min erfolgt. Da mit dem erfindungsgemäßen Verfahren auf eine zusätzliche oder wie bislang üblich gar eine Mehrfachaktivierung verzichtet wird, wird insbesondere an dieser Stelle des Verfahrens in vorteilhafter Weise eine Zeitersparnis bewirkt.

Neben der vorteilhaften Metallisierung von komplexen Kunststoffsubstraten, insbesondere aus Polyamid etc., liegt ein weiterer Vorteil des erfindungsgemäßen Verfahren darin, daß zu dessen Einsatz bereits bestehende Metallisierungsanlagen nicht abgerissen oder umgebaut werden müssen.

Im Anschluß an den erfindungsgemäßen Konditionierungsschritt können weitere Verfahrensschritte, insbesondere Spülschritte nachgeschaltet werden. Es wird vorgeschlagen, die konditionierten Kunststoffsubstrate bei Raumtemperatur mehrfach, vorzugsweise drei mal zu spülen.

Einige, der so behandelten, Kunststoffsubstrate haben an dieser Stelle des erfindungsgemäßen Verfahrens bereits eine derart vorteilhaft vorbereitete Oberfläche, daß sie ohne den üblichen zweiten Vorbehandlungsschritt, der sogenannte Beschleuniger, direkt außenstromlos metallisiert, zum Beispiel vernickelt oder verkupfert, werden können.

Die mit der ersten Lösung vorbehandelten Kunststoffsubstrate sowie die im weiteren Verfahren durch nachfolgende Prozeßschritte für eine stromlose Metallisierung vorbereiteten Kunststoffsubstrate, insbesondere die Polyamidsubstrate, werden in einer dritten Lösung, welche zumindest ein Metallion, beispielsweise Kupfer- oder Nickelionen, ein Reduktionsmittel, beispielsweise Natriumhypophosphit, einen Komplexbildner, beispielsweise Zitronensäure oder Ammoniak, und einen Stabilisator, beispielsweise Blei oder Wismut, aufweist, vollständig stromlos metallisiert, um abschließend eine verbesserte elektrolytische Metallisierung zu ermöglichen.

Die zweite Lösung, eine sogenannte Beschleunigerlösung, weist zumindest ein erstes Reduktionsmittel, das auf das nachfolgende außenstromlose Verfahren abgestimmt ist, und ein zusätzliches Reduktionsmittel auf. Im Anschluß an diesen Beschleunigungsschritt kann wahlweise ein weiterer Spülschritt nachgeschaltet werden.

Alternativ zu einer außenstromlosen Metallisierung kann nach der Beschleunigerlösung eine preiswertere Direktmetallisierung, zum Beispiel eine Vernickelung oder Verkupferung, erfolgen. Dazu muß lediglich der Palladiumgehalt der ersten Lösung auf 100 ppm oder mehr erhöht werden.

Gemäß einer vorteilhaften Weiterbildung des erfindungsgemäßen Verfahrens wird vorgeschlagen, während der Behandlungen der Kunststoffsubstrate in den einzelnen Lösungen, insbesondere während des Konditionierungsschittes, die jeweilige Lösung und/oder die Kunststoffsubstrate in den jeweiligen Lösungen zu bewegen. Dabei kann eine Bewegung des Bades beispielsweise auch durch Lufteinblasen oder durch Fluten des Kunststoffsubstrates bewirkt werden. Durch die Bewegung des Bades und/oder des Kunststoffsubstrates wird in vorteilhafter Weise sichergestellt, daß die Lösung optimal auf die gesamte Kunststoffoberfläche einwirken kann. Dadurch wird eine funktionssichere und haftfeste Metallisierung unterstützt. Weiterhin wird vorgeschlagen, während der einzelnen Verfahrensschritte des erfindungsgemäßen Verfahrens die einzelnen Lösungen zu filtrieren. Dies kann im Bad oder durch einen abgezweigten Nebenstrom außerhalb des Bades, wie beispielsweise durch eine Elektrodialyse erfolgen.

Mit der vorliegenden Erfindung soll ferner eine Lösung unter Schutz gestellt werden, welche die Eigenschaften einer zu metallisierenden Kunststoffoberfläche dahingehend beeinflußt bzw. diese derart chemisch verändert, daß sie effektiver metallisiert werden kann. Bezüglich der vorgenannten Aufgabe wird dies dadurch **gelöst**, daß eine Lösung zum gleichzeitigen Beizen und Aktivieren von Kunststoffsubstraten, umfassend eine oder mehrere Beizen, ein beizaktives Netzmittel, Mineralsäure und einen Edelmetallionen aufweisenden Aktivator, bereitgestellt wird.

Überraschenderweise stellte sich heraus, daß durch den Einsatz der erfindungsgemäßen Lösung die zu metallisierenden Kunststoffe besser galvanisiert werden, beziehungsweise die Galvanisierung bei einigen Kunststoffen, insbesondere bei Polyamidsubstraten überhaupt erst ermöglicht wird. Als besonders vorteilhaft ist der Einsatz dieser Lösung für die Konditionierung der Kunststoffsubstrate anzusehen. In dieser Lösung, der sogenannten Konditionierungslösung, wird vorteilhafterweise zumindest eine Beizlösung mit einer Aktivierungslösung verbunden. Der Einsatz dieser erfindungsgemäßen Konditionierungslösung bewirkt eine äußerst vorteilhafte Veränderung der Kunststoffoberfläche dahingehend, daß schon nach kurzer Behandlungszeit ausgeprägte Hohlräume, die eine Grundvoraussetzung für eine festhaftende metallische Schicht darstellen, ausgebildet werden und diese gleichzeitig für eine Metallisierung aktiviert werden. Es ist somit nicht mehr notwendig, die Kunststoffoberflächen kosten- und zeitintensiv zu konditionieren. Insbesondere für die Konditionierung von großen und/oder komplexen Werkstücken sowie schwer zu konditionierenden Kunststoffen, wie vor allem Polyamidsubstraten, ist im Gegensatz zu den bekannten Verfahren nur noch ein Verfahrensschritt und nicht zwei oder gar mehrere Konditionierungsschritte notwendig.

Die erfindungsgemäße Lösung enthält als Beizlösung beziehungsweise als Beize vorteilhafterweise 10 bis 30 ml/l einer organischen Säure, wie beispielsweise Ameisensäure, Essigsäure oder Trifluoressigsäure, vorzugsweise Essigsäure.

Weiterhin enthält die erfindungsgemäße Lösung 0,001 bis 10 g/l, vorzugsweise 0,001 bis 1 g/l, eines beizaktiven Netzmittels. Vorzugsweise wird eine Lösung verwendet, welche als beizaktives Netzmittel perfluorierte oder teilfluorierte Netzmittel enthält. Die Verwendung derartiger Netzmittel ist vorteilhaft, da sie in stark saurer Lösung stabil sind.

Zudem hat sich für die erfindungsgemäße Lösung der Einsatz eines ionogenen Aktivators als vorteilig erwiesen. Der Aktivator weist hierbei bevorzugt Edelmetallionen, besonders bevorzugt Palladiumionen, auf. Insbesondere die Verwendung von 10 bis 1000 mg/l, vorzugsweise 45 bis 55 mg/l an zweiwertigen Palladiumionen in der Konditionierungslösung ermöglicht vorteilhafterweise eine vollständige Aktivierung der Substratoberflächen und somit eine funktionssichere und reproduzierbare Metallisierung. Die Verwendung derartiger Aktivatoren ist vorteilhaft, da sie als Metallisierungskeime für die meisten Metalle, insbesondere Kupfer und Nickel, dienen.

Das vorliegende Verfahren soll anhand eines Ausführungsbeispiels näher erläutert werden. Dieses dient jedoch nur zur Erläuterung und ist nicht beschränkend. Besonders die Zusammensetzung der erfindungsgemäßen Lösung (Konditionierungslösung), insbesondere die darin enthaltenen Beiz- und/oder Aktivierungslösungen sind variabel.

### Ausführungsbeispiel für Polyamid - Kunststoff

### Verfahrensschritt 1: Konditionierung (Vorbehandlung und Aktivierung)

Die zu metallisierende Kunststoffoberfläche wurde in eine erste Lösung enthaltend eine salzsäurehaltige Polyamidbeize und Edelmetallionen eingebracht. Als Polyamidbeize wurde vorzugsweise eine organische Säure verwendet und als Edelmetallionen wurde vorzugsweise Palladiumchlorid eingesetzt.
- Badzusammensetzung:: 250 ml/l HCl (37%)
5 ml/l beizaktives Netzmittel
25 ml/l Essigsäure
50 ppm Pd²⁺
- Reaktionszeit:: 4 min
- Reaktionstemperatur:: 30°C
- zusätzliche Parameter:: Filtration
Warenbewegung

### Verfahrensschritt 2: Spüle

Die konditionierten Kunststoffsubstrate wurden zumindest einmal im Idealfall drei mal gespült.

### Verfahrensschritt 3: Beschleunigerlösung (optional)

Die zu metallisierende Kunststoffoberfläche wurde optional, je nach Behandlungsergebnis mit der ersten Lösung, in eine zweite Lösung, enthaltend zumindest ein auf die nachfolgende Lösung zur außenstromlosen Metallisierung abgestimmtes erste Reduktionsmittel und ein weiteres Reduktionsmittel, eingebracht. Als Reduktionsmittel wurden vorzugsweise Natriumhypophosphit und Dimethylaminoboran eingesetzt.
- Badzusammensetzung:: 20 g/l Natriumhypophosphit
1 g/l Dimethylaminoboran
- Reaktionszeit:: 4 min
- Reaktionstemperatur:: 45°C
- zusätzliche Parameter:: Filtration

Die Behandlung der Kunststoffsubstrate in der zweiten Lösung erfolgt vorteilhafterweise innerhalb eines Zeitraums von 1 bis 10 min, vorzugsweise 4 bis 6 min, bei einer Temperatur zwischen 35°C und 55°C, vorzugsweise zwischen 40 und 50°C.

### Verfahrensschritt 4: Spüle (optional)

An dieser Stelle wurde je nach Notwendigkeit eine weitere Spüle durchgeführt.

### Verfahrensschritt 5: Chemisch Nickel

Je nach Vorbehandlungsergebnis beziehungsweise Prozeßaufbau wurde das Kunststoffsubstrat, im Anschluß an die Verfahrensschritte 2, 3 oder 4, in eine dritte Lösung zur chemisch-reduktiven Beschichtung (chemisch Nickel) eingebracht. Diese Lösung enthielt Nickelionen, ein Reduktionsmittel, vorzugsweise Natriumhypophosphit, Komplexbildner, vorzugsweise Zitronensäure und Ammoniumchlorid, und einen Stabilisator, vorzugsweise Bleiionen.

Es wird vorgeschlagen, daß die Kunststoffsubstrate 5 bis 15 min, vorzugsweise 8 bis 12 min in der dritten Lösung verbleiben. Zudem sollte die dritte Lösung vorteilhafterweise einen pH-Wert im Bereich von 5 bis 5,5, vorzugsweise 5,2 bis 5,4 auf. Die chemisch-reduktive Beschichtung der Kunststoffsubstrate erfolgt bei einer Temperatur zwischen 60°C und 75°C, vorzugsweise zwischen 65 und 70°C.

Hierbei wurde ein Prozeßdurchlauf mit den folgenden Parametern durchgeführt:
- Badzusammensetzung:: 4 g/l Ni²⁺-lonen
30 g/l Natriumhypophosphit
30 g/l Zitronensäure
20 g/l Ammoniumchlorid
1 ppm Pb²⁺-Ionen
- Reaktionszeit:: 10 min
- Reaktionstemperatur:: 65-68°C
- pH-Bereich:: 5,2-5,4
- zusätzliche Parameter:: Filtration

Es zeigte sich, daß bei der Verwendung der erfindungsgemäßen Konditionierungslösung gemäß Ausführungsbeispiel die außenstromlose Abscheidung von Nickel gleichmäßiger verläuft und die so abgeschiedenen Nickelschichten im Vergleich zu Nickelschichten, die analog jedoch mit einzelnen Beiz- und Aktivierungsschritten erzeugt wurden, höhere spezifische Leitfähigkeiten besitzen.

Zudem müssen die Galvanisierungsbedingungen mit dem erfindungsgemäßen Verfahren nicht erst auf den jeweils zu metallisierenden Kunststoff eingestellt werden, um eine funktionssichere und reproduzierbare Metallisierung zu bewirken, sondern die unterschiedlichsten, eingangs beispielhaft genannten Kunststoffe können mit dem erfindungsgemäßen Verfahren ohne aufwendige Verfahrensanpassungen metallisiert werden. Durch die Kombination von Beizen und Aktivieren mittels der beschriebenen Konditionierungslösung wird die Kunststoffoberfläche optimal auf die Metallisierung vorbereitet.

## Patentansprüche

1. Verfahren zur Metallisierung von Kunststoffsubstraten, wobei die Kunststoffsubstrate gebeizt, aktiviert, gespült, gegebenenfalls mit einer Beschleunigerlösung behandelt und chemisch-reduktiv und/oder im Anschluß elektrolytisch metallisiert werden, **dadurch gekennzeichnet, daß** das Beizen und Aktivieren der Kunststoffsubstrate in einem gemeinsamen Verfahrensschritt durchgeführt wird und in einer ersten Beiz- und Aktivierungslösung, umfassend zumindest eine mineralsäurehaltige Beize und ein ionogenen Aktivator, erfolgt, wobei die Beize wenigstens Ameisensäure, Essigsäure und/oder Trifluoressigsäure aufweist.

2. Verfahren nach Anspruch 1, **dadurch gekennzeichnet, daß** als Kunststoffsubstrate vorzugsweise Polyamidsubstrate verwendet werden.

3. Verfahren nach einem der Ansprüche 1 bis 2, **dadurch gekennzeichnet, daß** die Beiz- und Aktivierungslösung zumindest ein oder mehrere Beizen, ein beizaktives Netzmittel, eine Mineralsäure und einen Edelmetallionen enthaltenden Aktivator aufweist.

4. Verfahren nach einem der Ansprüche 1 bis 3, **dadurch gekennzeichnet, daß** der zusammengefaßte Verfahrensschritt in der Beiz- und Aktivierungslösung bei einer Temperatur zwischen 20°C und 90°C, vorzugsweise zwischen 30°C und 35°C erfolgt.

5. Verfahren nach einem der Ansprüche 1 bis 4, **dadurch gekennzeichnet, daß** die Kunststoffsubstrate 1 bis 10 Min., vorzugsweise 4 bis 6 Min., mit der Beiz- und Aktivierungslösung behandelt werden.

6. Verfahren nach einem der Ansprüche 1 bis 5, **dadurch gekennzeichnet, daß** die Kunststoffsubstrate anschließend mit einer zweiten Reduktionslösung behandelt werden, wobei die Reduktionslösung zumindest ein einem anschließenden außenstromlosen Verfahren angepaßtes erstes Reduktionsmittel und ein weiteres Reduktionsmittel aufweist.

7. Verfahren nach Anspruch 6, **dadurch gekennzeichnet, daß** die Kunststoffsubstrate bei einer Temperatur zwischen 35°C und 55°C, vorzugsweise zwischen 40°C und 50°C mit der zweiten Reduktionslösung behandelt werden.

8. Verfahren nach einem der Ansprüche 6 oder 7, **dadurch gekennzeichnet, daß** die Kunststoffsubstrate 1 bis 10 Min., vorzugsweise 4 bis 6 Min. mit der zweiten Reduktionslösung behandelt werden.

9. Lösung zum gleichzeitigen Beizen und Aktivieren von Kunststoffsubstraten, umfassend eine oder mehrere Beizen, ein beizaktives Netzmittel, eine Mineralsäure und einen Edelmetallionen enthaltenden Aktivator, **dadurch gekennzeichnet, daß** die Lösung als Beize wenigstens Ameisensäure, Essigsäure und/oder Trifluoressigsäure enthält.

10. Lösung nach Anspruch 9, wobei die Lösung bis zu 50 g/l der organischen Säure enthält.

11. Lösung nach einem der Ansprüche 9 bis 10, wobei die Lösung 0,001 bis 10 g/l, vorzugsweise 0,01 bis 1 g/l eines beizaktiven Netzmittels enthält.

12. Lösung nach einem der Ansprüche 9 bis 11, wobei die Lösung als beizaktives Netzmittel ein perfluoriertes oder teilfluoriertes Netzmittel enthält.

13. Lösung nach einem der Ansprüche 9 bis 12, wobei die Lösung 10 bis 1000 mg/l, vorzugsweise 45 bis 55 mg/l an zweiwertigen Palladiumionen aufweist.

14. Lösung nach einem der Ansprüche 9 bis 13, wobei diese 200 bis 300 ml/l, vorzugsweise 225 bis 275 ml/l einer 37 % igen Salzsäure enthält.

## Claims

1. A process for metallising plastic substrates, wherein the plastic substrate is etched, activated and rinsed, possibly treated with an accelerator solution and metallised by chemical-reductive means and/or then electrolytically, **characterised in that** the etching and activation of the plastic substrates is performed in a joint process step and in a first and activating solution, comprising at least one mineral-acid-containing etchant and an ionogenic activator, wherein the etchant displays at least formic acid, acetic acid and/or trifluoroacetic acid.

2. The process according to claim 1, **characterised in that** polyamide substrates are preferably used as the plastic substrate.

3. The process according to one of the claims 1 to 2, **characterised in that** the etching and activating solution displays at least one or more etchants, an etch-active wetting agent, a mineral acid and an activator containing precious metal ions.

4. The process according to one of the claims 1 to 3, **characterised in that** the combined process stage takes place at a temperature of between 20 °C and 90 °C, preferably between 30 °C and 35 °C, in the etching and activating solution.

5. The process according to one of the claims 1 to 4, **characterised in that** the plastic substrates are treated with the etching and activating solution for 1 to 10 mins, preferably 4 to 6 mins.

6. The process according to one of the claims 1 to 5, **characterised in that** the plastic substrates are then treated with a second reduction solution, wherein the reduction solution displays at least one first reducing agent adapted to a subsequent external current-free process and a further reducing agent.

7. The process according to claim 6, **characterised in that** the plastic substrates are treated with the second reducing solution at a temperature of between 35 °C and 55 °C, preferably between 40 °C and 50 °C.

8. The process according to one of the claims 6 or 7, **characterised in that** the plastic substrates are treated with the second reducing solution for 1 to 10 mins, preferably 4 to 6 mins.

9. A solution for the simultaneous etching and activation of plastic substrates, comprising one or more etchants, a etch-active wetting agent, a mineral acid and an activator containing precious metal ions, **characterised in that** the solution contains at least formic acid, acetic acid and/or trifluoroacetic acid as the etchant.

10. The solution according to claim 9, wherein the solution contains up to 50 g/l of the organic acid.

11. The solution according to one of the claims 9 to 10, wherein the solution contains 0.001 to 10 g/l, preferably 0.01 to 1 g/l, of an etch-active wetting agent.

12. The solution according to one of the claims 9 to 11, wherein the solution contains a perfluorised or partially fluorised wetting agent as the etch-active wetting agent.

13. The solution according to one of the claims 9 to 12, wherein the solution 10 displays 10 to 1000 mg/l, preferably 45 to 55 mg/l, bivalent palladium ions.

14. The solution according to one of the claims 9 to 13, wherein this contains 200 to 300 ml/l, preferably 225 to 275 ml/l, of a 37% hydrochloric acid.

## Revendications

1. Procédé de métallisation de substrats en matière plastique, lesdits substrats en matière plastique étant décapés, activés, rincés, le cas échéant traités avec une solution d'accélérateur et métallisés par réduction chimique et/ou, ensuite, par électrolyse, **caractérisé en ce que** lesdits décapage et activation desdits substrats en matière plastique sont réalisés ensemble dans une étape unique et dans une première solution de décapage et d'activation comprenant au moins un décapant contenant de l'acide minéral et un activateur ionogène, ledit décapant comportant au moins de l'acide formique, de l'acide acétique et/ou de l'acide trifluoroacétique.

2. Procédé selon la revendication 1, **caractérisé en ce que** l'on utilise préférentiellement des substrats en polyamide en tant que substrats en matière plastique.

3. Procédé selon l'une des revendications 1 à 2, **caractérisé en ce que** ladite solution de décapage et d'activation comporte au moins un ou plusieurs décapants, un agent mouillant ayant une activité décapante, un acide minéral et un activateur contenant des ions de métaux nobles.

4. Procédé selon l'une des revendications 1 à 3, **caractérisé en ce que** ladite étape unique est réalisée dans ladite solution de décapage et d'activation à une température comprise entre 20 °C et 90 °C, de préférence entre 30 °C et 35 °C.

5. Procédé selon l'une des revendications 1 à 4, **caractérisé en ce que** lesdits substrats en matière plastique sont traités avec ladite solution de décapage et d'activation pendant 1 à 10 min, de préférence pendant 4 à 6 min.

6. Procédé selon l'une des revendications 1 à 5, **caractérisé en ce que** les substrats en matière plastique sont ensuite traités avec une deuxième solution réductrice, ladite solution réductrice comportant au moins un premier agent de réduction adapté à la réalisation ultérieure d'un procédé sans aucune source extérieure de courant ainsi qu'un autre agent de réduction.

7. Procédé selon la revendication 6, **caractérisé en ce que** lesdits substrats en matière plastique sont traités avec ladite deuxième solution réductrice à une température comprise entre 35 °C et 55 °C, de préférence entre 40 °C et 50 °C.

8. Procédé selon l'une des revendications 6 ou 7, **caractérisé en ce que** lesdits substrats en matière plastique sont traités avec ladite deuxième solution réductrice pendant 1 à 10 min, de préférence pendant 4 à 6 min.

9. Solution destinée au décapage et à l'activation simultanés de substrats en matière plastique, comprenant un ou plusieurs décapants, un agent mouillant ayant une activité décapante, un acide minéral et un activateur contenant des ions de métaux nobles, **caractérisée en ce que** ladite solution contient, en tant que décapant, au moins de l'acide formique, de l'acide acétique et/ou de l'acide trifluoroacétique.

10. Solution selon la revendication 9, ladite solution contenant jusqu'à 50 g/l de l'acide organique.

11. Solution selon l'une des revendications 9 à 10, ladite solution contenant 0,001 à 10 g/l, de préférence 0,01 à 1 g/l, d'un agent mouillant ayant une activité décapante.

12. Solution selon l'une des revendications 9 à 11, ladite solution contenant, en tant qu'agent mouillant ayant une activité décapante, un agent mouillant perfluoré ou partiellement fluoré.

13. Solution selon l'une des revendications 9 à 12, ladite solution comportant 10 à 1000 mg/l, de préférence 45 à 55 mg/l, de ions divalents de palladium.

14. Solution selon l'une des revendications 9 à 13, contenant 200 à 300 ml/l, de préférence 225 à 275 ml/l, d'un acide chlorhydrique à 37 %.
